Europäisches Patentamt

European Patent Office

Office européen des brevets

(11) Publication number: **0 004 156**
A2

(12) **EUROPEAN PATENT APPLICATION**

(21) Application number: **79300296.5**

(22) Date of filing: **27.02.79**

(51) Int. Cl.²: **A 21 C 11/20**
**A 22 C 7/00, B 30 B 15/30**

(30) Priority: **04.03.78 GB 868578**

(43) Date of publication of application:
**19.09.79 Bulletin 79/19**

(84) Designated contracting states:
**BE DE FR GB IT NL SE**

(71) Applicant: **BRITISH INDUSTRIAL PLASTICS LIMITED**
**20 St. Mary's Parsonage**
**Manchester M3 2NL(GB)**

(72) Inventor: **Tranter, Harold William**
**90 Stonehall Drive**
**Aldridge Staffordshire(GB)**

(74) Representative: **Watters, Basil David Peter et al,**
**20 St. Mary's Parsonage**
**Manchester M3 2NL(GB)**

(54) **Improvements in and relating to moulding machines.**

(57) An apparatus for feeding dough moulding composition
to the barrel of an extruder or injection moulding machine
comprises a reservoir having means therein to urge moulding composition from said reservoir to said barrel, a channel
connecting said reservoir and barrel, said channel having a
variable volume portion and isolating valve means for closing the channel between the reservoir and said variable volume portion so that when said channel is open, moulding
material flowing through the channel to the barrel will at
least partly expand said portion so as to store moulding material therein, the arrangement being such that on closing
said isolating valve means and contracting said variable volume portion, the flow of moulding composition to the barrel
is maintained from said portion for at least as long as is
necessary to replenish the reservoir.

Improvements in and Relating to Moulding Machines

This invention relates to the extrusion or injection moulding of dough moulding compositions.

Such materials are stiff, pasty and difficult to feed to moulding apparatus because they do not flow, except under pressure. Hitherto, this problem has been overcome by means of a reservoir containing a supply of dough moulding compound and a piston which is applied to the dough moulding compound so as to progressively urge it into the moulding apparatus. However, as the supply runs out, it is necessary to stop the apparatus, withdraw the piston and replenish the reservoir. To avoid stopping the moulding apparatus, a second, duplicate reservoir can be employed, together with means for changing over to this second reservoir when the first one is empty. For example, the reservoirs may be mounted so they can be interchanged, or a valve may be used to switch the flow of moulding composition from one reservoir to the other.

Such arrangements necessarily call for the use of two, relatively large reservoirs, complete with pistons and their operating mechanisms. It is an object of the invention to enable continuous operation of the moulding apparatus without the inconvenience of such a duplicate reservoir and piston assembly.

0004156

## DESCRIPTION OF THE INVENTION

According to the present invention, means for feeding dough moulding composition to the barrel of an extruder or injection moulding machine comprises a reservoir, having means therein to urge moulding composition from said reservoir to the barrel of the extruder or injection moulding machine, a channel connecting said reservoir and barrel, said channel having a variable volume portion and isolating valve means for closing the channel between the reservoir and said variable volume portion so that when said channel is open, moulding material flowing through the channel to the barrel will at least partly expand said portion so as to store moulding material therein, the arrangement being such that on closing said isolating valve means, and contracting said variable volume portion the flow of moulding composition to the barrel is maintained from said portion for at least as long as is necessary to replenish the reservoir.

Preferably the variable volume portion is constituted by an ancillary piston and cylinder device.

Preferably, the apparatus also includes means for operating the isolating valve means and the ancillary piston and cylinder device in timed relation substantially automatically when the level in the reservoir has fallen to a prechosen extent.

Advantageously, the ancillary piston and cylinder device and isolating valve means are located directly at the base of the reservoir so that normal operation of the latter fills the cylinder by displacing the piston therein, subsequent return movement of the piston progressively displacing substantially the whole of the thus stored material from the cylinder before the isolating valve means is used to permit new material from the re-filled reservoir to enter. By preventing the piston of the piston and cylinder device from being displaced by this new material for a brief period, the new material can

- 3 -

be used to purge the valve means and associated passageways
of previously-stored material.  This is important in
minimising the risk of any material curing or becoming
degraded by virtue of an excessively long dwell time
in the apparatus.  It is therefore helpful in maintaining
homogeneity in the final product or products made by
the extruder or injection moulding machine.  The storage
capacity of the ancillary piston and cylinder device
in a typical case would be about 10 to 15% of that of
the reservoir, so that a reservoir holding say a charge
of 32kg. of material would have an ancillary piston
and cylinder device capable of holding 4kg. of material.
Naturally, the amount which it is necessary to store
will also reflect the speed and ease with which the
reservoir can be replenished, allowing for normal minor
delays which may occur under production conditions.
The rate of consumption by the extruder or injection
moulding machine must also be considered in this context.

## EMBODIMENT OF THE INVENTION

In order that the invention be better understood a preferred
embodiment of it will now be described by way of example
with reference to the accompanying drawing in which
the sole Figure is a cross-sectional view through apparatus
for feeding dough moulding composition to an extruder,
taken in a plane normal to the axis of the extruder barrel
and including a hydraulic circuit and associated components.

In the figure, an extruder barrel 1 contains a screw
2; both are conventional and will therefore not be described
further. Mounted on the barrel in communication with
a feed aperture 3 is the apparatus for feeding dough
moulding composition to the extruder.  The apparatus
comprises a support block 4 carrying a feed hopper 5,
The bottom of the hopper has a discharge outlet 6; the
body of the hopper is essentially cylindrical and contains
a piston 7, operated by a hydraulic actuator 13 .  The
outlet 6 communicates with the feed aperture 6 through a passageway 8 which includes an isolating valve 9 and
an ancillary piston and cylinder device, a cylinder 11
and a piston 12 operated by a hydraulic actuator 14.
The latter is itself a piston and cylinder device operated
by the hydraulic circuit, as will be discussed later.
The passageway 8 opens into the cylinder 11 from the
valve 9 so that when the piston 12 in the cylinder
is at the limit of its travel (to the right, in the
figure), the end of the cylinder together with passageway
8 defines a flow path containing no "dead" spaces wherein
material can lodge. The flow path is essentially self-
purging.

The hydraulic circuit is depicted in conventional manner
and includes flow reversal valves 15, 16 and 17, position
sensing (limit) switches 18,19,20,21, and 22, a hydraulic
actuator 23, a flow control valve 24, and pressure reducing
valves 25 and 27. Hydraulic lines marked P are connected
to a source of fluid under pressure, whilst lines marked
T communicate with a fluid reservoir which is at, or
near atmospheric pressure, for all practical purposes.
Although not shown for reasons of simplicity, the pressure
source and fluid reservoir are those associated with
the moulding machine.

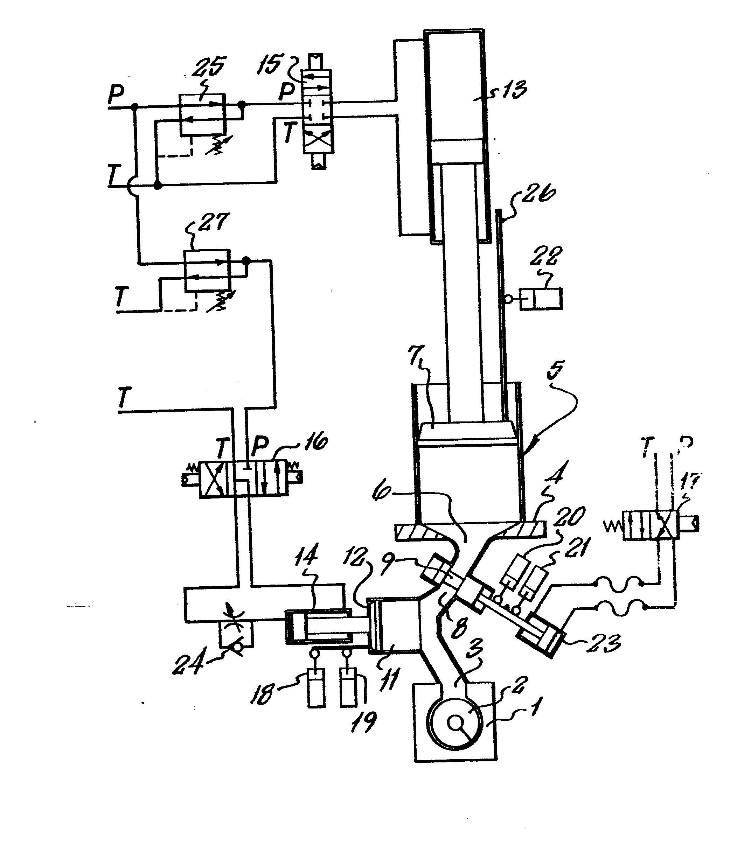

The operation of the apparatus is as follows, starting
with the hopper 5 full of dough moulding composition.
To feed the barrel 1 the valve 9 must be opened by operating
valve 17. This in turn operates the actuator 23 and
opens the valve. Valve 15 is thereafter operated to
urge the piston 7 downwardly inside the hopper under
the control of the piston and cylinder device 13. This
forces moulding composition through the passageway 8
into the piston and cylinder device 10 and into the feed
aperture 6. Valve 16 is closed at this time so that
no pressure is applied to the piston 12 by the actuator
13. However, fluid in the actuator is free to escape back into the reservoir at a rate controlled by the valve 24, so that the flow of moulding material through passageway 8 causes the piston 12 to be displaced to the left in figure 2, thereby filling the cylinder 11 whilst at the same time feeding material to the screw 2 through aperture 3. The flow control valve 24 serves to regulate the rate at which material accumulates in the cylinder 11 so that the stored material is compacted.

When the piston 7 has moved down to such an extent that the hopper is nearly empty, limit switch 22 is operated by a cam 26. This operates the valve 17 to close the isolating valve 9; it also operates valve 15 to halt the movement of the piston 7. Simultaneously, the valve 16 is operated to admit fluid to the piston and cylinder device 13 which therefore applies pressure to the piston 12 so as to force the stored moulding composition back into the passageway 8 and because the valve 9 is closed, into the feed aperture 6. The supply of moulding composition is thereby maintained until the hopper 5 has been replenished by withdrawing the piston 7 and introducing a fresh supply of moulding composition. The maximum length of time available for this will depend on the rate of consumption of the moulding machine, as well as on the capacity of the cylinder 11. In this context, the limit switches 18 and 19 should be mentioned. Limit switch 18 serves to indicate that the cylinder 11 has been filled; a failure to do this could of course lead to an unwanted interruption of the supply to the machine. Limit switch 19 indicates that the contents of the cylinder 11 have been used up and that valve 9 should be opened, together with valve 15 to initiate the supply of material from the replenished hopper 5. In practice, of course, the limit switch 19 starts the whole operating sequence again, but by means of a timer associated with the machine control system, the valve 16 is not released immediately and pressure remains on the piston 12 until the new moulding material has purged the passageway 8 and the right hand end portion of the cylinder 11.  The necessary delay is introduced automatically by the timer in the machine control system.

It will be appreciated that valves 15 and 16 must be operated (preferably automatically) to stop the flow of material when the screw 2 is not rotating, because the resultant back pressure may result in extrusion of material around the margins of the pistons 7 and 12.

It will also be appreciated that the apparatus can be used with a plunger-type injection moulding machine to feed material to the plunger.

In order to ensure a sensibly constant feed rate, the areas of the pistons 7 and 12 and the hydraulic pressures applied are preferably selected so that approximately the same pressure is always applied to the moulding composition being fed   This is to avoid undue variation in the moulding process.

Claims

1. Apparatus for feeding dough moulding composition to the barrel of an extruder or injection moulding machine comprising a reservoir having means therein to urge moulding composition from said reservoir to said barrel, a channel connecting said reservoir and barrel, characterised by the provision of a variable volume portion(11) associated with said channel and isolating valve means (9) for closing the channel (8) between the reservoir (5) and said variable volume portion so that when said channel is open, moulding material flowing through the channel to the barrel will at least partly expand said portion so as to store moulding material therein, the arrangement being such that on closing said isolating valve means and contracting said variable volume portion, the flow of moulding composition to the barrel is maintained from said portion for at least as long as is necessary to replenish the reservoir.

2. Apparatus according to claim 1 characterised in that the variable volume portion is constituted by an ancillary piston and cylinder device (11,12).

3. Apparatus according to claim 1 or claim 2 characterised in that the variable volume device (11) is located directly at the base (6) of the reservoir so that normal operation of the latter at least partly expands the variable volume device, subsequent contraction thereof progressively displacing substantially the whole of the stored material from the device, before the isolating valve means is used to permit new material from the replenished reservoir to enter.

0004156

4. Apparatus according to any one of claims 1, 2 and 3, characterised in that the storage capacity of the variable volume device (11) is of the order of from 10 to 15% of that of the reservoir (5).

5. Apparatus according to any proceeding claim further characterised by the provision of means (22,26) for operating the isolating valve means (9) and variable volume device (11) substantially automatically when the level in the reservoir (5) has fallen to a prechosen extent.